# FASCICULE DE BREVET EUROPEEN

(11) **EP 1 657 229 B1**
(45) Date de publication et mention de la délivrance du brevet: **21.02.2018**
(21) Numéro de dépôt: 05300912.2
(22) Date de dépôt: 10.11.2005
(51) Int. Cl.: C05F 17/02, C05F 9/04, C05F 17/00

(54) **DISPOSITIF DE COMPOSTAGE DE DÉCHETS VÉGÉTAUX**
VORRICHTUNG ZUR KOMPOSTIERUNG VON GRÜNABFÄLLEN
DEVICE FOR COMPOSTING GREEN WASTES

(30) Priorité: 16.11.2004 FR 0412122
(43) Date de publication de la demande: 17.05.2006
(73) Titulaire: COMPAGNIE PLASTIC OMNIUM, 69007 Lyon (FR)
(72) Inventeur: Gelinau, Catherine, 78610 Auffargis (FR)
(74) Mandataire: Remy, Vincent Noel Paul

(56) Documents cités:
- EP-A- 0 767 312
- DD-A1- 156 689
- DE-C1- 4 323 211
- GB-A- 2 108 933
- US-A1- 2004 149 766
- PATENT ABSTRACTS OF JAPAN vol. 1998, no. 01, 30 janvier 1998 (1998-01-30) & JP 09 226799 A (SANKO CO LTD), 2 septembre 1997 (1997-09-02) & JP 09 226799 A (SANKO CO LTD) 2 septembre 1997 (1997-09-02)

## Description

La présente invention a pour objet un dispositif de compostage de déchets végétaux, et plus particulièrement un dispositif de compostage comportant un réceptacle et un couvercle fermant le réceptacle.

On connaît par le brevet japonais JP 09-226799 une boîte de rangement pour engin à deux roues comportant un couvercle réalisé d'un seul tenant et pouvant coulisser verticalement par rapport au corps, lorsque le couvercle est en position d'ouverture.

Le brevet DD 15 66 89 décrit un bac de collecte de déchets comportant un couvercle pourvu de deux volets avant et arrière articulés entre eux, le volet arrière étant relié à la cuve par une liaison de rotation pure.

Il existe notamment un besoin pour rendre plus aisée l'ouverture et la fermeture du couvercle du dispositif.

L'invention a ainsi pour objet un dispositif de compostage de déchets végétaux, comportant :
- un réceptacle,
- un couvercle comportant un volet avant et un volet arrière, le volet avant étant fixé de manière pivotante sur le volet arrière, ce volet arrière étant monté sur le réceptacle de manière à pouvoir pivoter autour d'un axe de rotation géométrique fixe par rapport au réceptacle et, de préférence, coulisser par rapport à cet axe de rotation,
dans lequel le volet arrière du couvercle comporte au moins une rainure et le réceptacle au moins un ergot agencé pour s'engager et coulisser dans la rainure et la rainure comporte des première et deuxième butées pour limiter la course de coulissement du volet arrière par rapport au réceptacle respectivement lors de l'ouverture et la fermeture du couvercle, le basculement des volets avant et arrière étant facilité par un réglage approprié de la course de coulissement du couvercle permettant d'équilibrer le poids des volets avant et arrière de manière à ce qu'un effort relativement faible exercé sur le volet avant suffise à faire basculer les volets avant et arrière lors de l'ouverture.

Grâce à l'invention, il est possible d'ouvrir et fermer le couvercle de manière relativement simple, par exemple en agissant sur le volet avant seulement.

De préférence, le dispositif est agencé de manière à ce que, lorsque le couvercle est amené d'une position de fermeture vers une position d'ouverture, le volet arrière, dans un premier temps, coulisse par rapport audit axe de rotation et, dans un deuxième temps, pivote par rapport audit axe de rotation sensiblement sans coulisser par rapport à celui-ci.

Ainsi, pourfermer le couvercle, l'utilisateur pousse le volet avant vers l'arrière, ce qui provoque, après le coulissement du couvercle par rapport au réceptacle suivant une direction sensiblement perpendiculaire à l'axe de rotation précité, le basculement du volet arrière par rapport à l'axe de rotation précité simultanément au basculement du volet avant par rapport au volet arrière, le volet avant venant alors s'accoler sensiblement contre le volet arrière, en fin d'ouverture.

Dans la position d'ouverture, le couvercle peut donc présenter un faible encombrement et ne pas gêner l'introduction de déchets végétaux dans le réceptacle.

Dans un exemple de mise en oeuvre de l'invention, les volets avant et arrière sont agencés de manière à ce que, dans la position d'ouverture, ceux-ci puissent former entre eux un angle inférieur à 30°, notamment inférieur à 20°, par exemple inférieur à 10°.

Dans la position d'ouverture, les volets avant et arrière peuvent être sensiblement verticaux, faisant par exemple un angle avec la verticale inférieur à 20°.

Dans un exemple de mise en oeuvre de l'invention, les volets avant et arrière sont agencés de manière à ce que, dans la position de fermeture, ceux-ci forment un angle inférieur à 180°, par exemple inférieur à 170°, cet angle pouvant rester par exemple supérieur à 120°, notamment 150°.

Avantageusement, le volet avant présente une largeur, mesurée suivant une direction sensiblement perpendiculaire à l'axe de rotation, inférieure à celle du volet arrière.

De préférence, le volet avant n'est pas fixé sur le réceptacle.

Dans la position d'ouverture, le maintien en position sensiblement verticale des volets avant et arrière peut être assuré par la répartition du poids du couvercle, le centre de gravité de celui-ci pouvant notamment se retrouver en arrière de l'axe de pivotement entre les volets avant et arrière.

Ainsi, même en cas de vent relativement fort par exemple, le volet avant peut basculer légèrement vers l'avant sans provoquer la fermeture brutale du couvercle, le volet avant restant notamment en appui sur un rebord supérieur du réceptacle.

Ainsi, le risque d'accident est réduit.

La rainure s'étend avantageusement sensiblement suivant un bord du volet arrière.

De préférence, le volet arrière comporte deux rainures s'étendant sensiblement suivant deux bords opposés du volet arrière, et le réceptacle comporte deux ergots agencés chacun pour s'engager et coulisser dans une rainure correspondante.

La première butée servant lors de l'ouverture du couvercle peut être formée par une portée ou épaulement du volet arrière.

La deuxième butée servant lors de la fermeture du couvercle peut être formée par une pièce, notamment une tige, rapportée dans la rainure du volet arrière.

Dans un exemple de mise en oeuvre de l'invention, le réceptacle et/ou le couvercle comporte des lames en bois assemblées sur des montants ou des linteaux.

Le réceptacle peut être constitué par quatre panneaux formés par des lames en bois.

Le réceptacle peut par exemple être dépourvu de fond et présenter une contenance comprise entre 200 et 1 200 L par exemple, cette contenance pouvant être de 300 L, 600 L, 800 L ou 1 000 L notamment.

L'invention pourra être mieux comprise à la lecture de la description détaillée qui va suivre, d'un exemple de mise en oeuvre non limitatif de l'invention, et à l'examen du dessin annexé, sur lequel :
- les figures 1 et 2 représentent, schématiquement et partiellement, un dispositif de compostage conforme à l'invention, le couvercle étant respectivement dans les positions de fermeture et d'ouverture,
- la figure 3 est une vue schématique et partielle de la fixation du couvercle sur le réceptacle, et
- la figure 4 représente, schématiquement et partiellement, un détail du réceptacle de la figure 1.

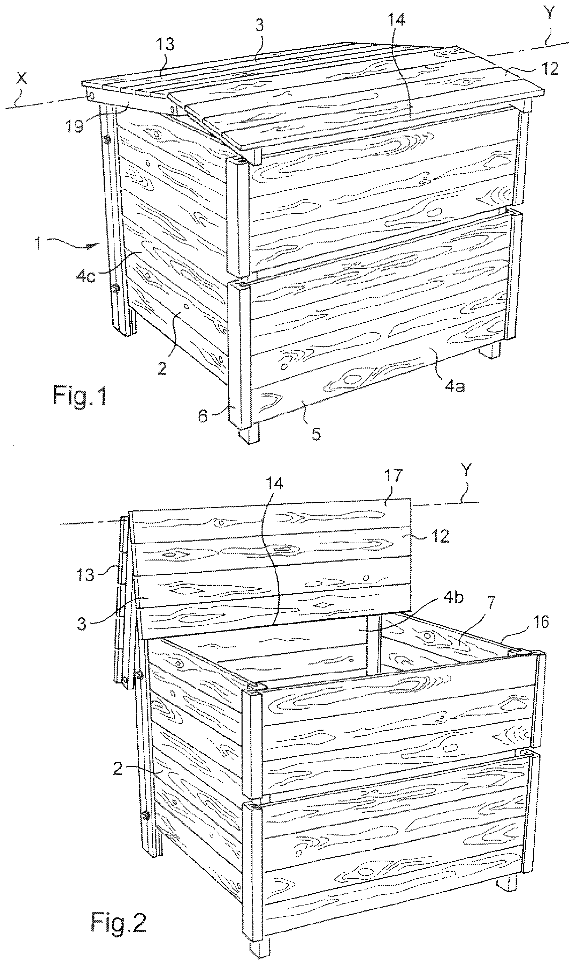

On a représenté sur la figure 1 un dispositif de compostage 1 conforme à l'invention, comportant un réceptacle 2 et un couvercle 3.

Le dispositif 1 dépourvu de fond est notamment destiné à être disposé à l'extérieur, par exemple dans un jardin.

Le dispositif 1 peut présenter une contenance d'environ 300, 600, 800 ou 1 000 L, par exemple.

Le réceptacle 2 comporte quatre panneaux, à savoir deux panneaux avant 4a et arrière 4b et deux panneaux latéraux 4c.

Ces panneaux 4a-4c comportent des lames en bois 5 assemblées sur des montants verticaux 6.

Le panneau avant 4a peut par exemple comporter des portions inférieure et supérieure amovibles.

Le réceptacle 2 comporte un rebord supérieur 16 définissant une ouverture 7 pouvant être fermée par le couvercle 3.

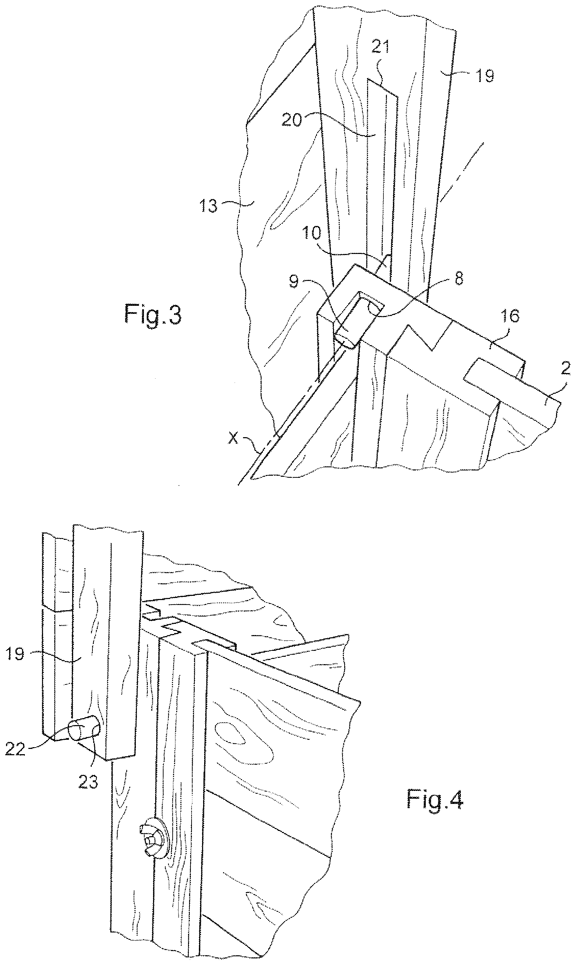

Le réceptacle 2 comporte, à proximité du rebord supérieur 16, de part et d'autre du panneau arrière 4b, des orifices 8 à travers chacun desquels est engagé un ergot 9, comme illustré sur la figure 3 Dans l'exemple considéré, l'ergot 9 est une tige en bois.

Les deux ergots 9 définissent un axe de rotation géométrique X fixe par rapport au réceptacle 2.

Chaque ergot 9 présente une portion 10 faisant saillie à l'extérieur du réceptacle 2.

Le couvercle 3 comporte un volet avant 12 et un volet arrière 13, le volet avant 12 étant articulé sur le volet arrière 13 autour d'un axe de rotation Y, comme illustré sur les figures 1 et 2.

Les volets 12 et 13 comportent des lames en bois 17 assemblées sur des linteaux 19.

Les volets 12 et 13 sont par exemple assemblés à l'aide de boulons afin de former une liaison pivotante.

Dans l'exemple considéré, le volet avant 12 présente une largeur mesurée dans une direction perpendiculaire à l'axe X inférieure à celle du volet arrière 13.

Le volet avant 12 présente un bord 14 qui peut venir en appui et coulisser sur le rebord supérieur 16 du réceptacle 2, comme illustré sur la figure 2.

Chaque linteau 19 est pourvu d'une rainure 20 dans laquelle s'engage la portion 10 d'un ergot 9 du réceptacle 2.

Chaque rainure 20 présente une portée ou épaulement 21 réalisé sur le linteau 19 et formant une première butée pour l'ergot 9 lors de l'ouverture du couvercle.

Un ergot 22 est introduit dans un orifice 23 d'un linteau 19, réalisé au droit de la rainure 20, cet ergot 22 ne faisant initialement pas saillie dans la rainure 20. Ainsi, la portion 10 de l'ergot 9 peut être introduite dans la rainure 20 correspondante, comme illustré sur la figure 4.

Puis, l'ergot 22 est enfoncé à travers l'orifice 23 afin de déborder dans la rainure 20 et servir de deuxième butée à l'ergot 9 du réceptacle 2.

La première butée 21 et la deuxième butée 22 permettent de définir la course de coulissement de l'ergot 9 dans la rainure 20.

Dans la position de fermeture du couvercle 3, les volets avant 12 et arrière 13 forment un angle inférieur à 180°, par exemple inférieur à 170°, étant inclinés par rapport à l'horizontal.

Pour ouvrir le couvercle 3, l'utilisateur pousse le volet avant 12 vers l'arrière, ce qui entraîne le coulissement du couvercle 3 par rapport au réceptacle 2, sur une course correspondant sensiblement à la longueur de la rainure 20, entre les première et deuxième butées 21 et 22.

A partir du moment où la portion 10 de l'ergot 9 vient en appui sur la butée 21, le volet arrière 13 pivote autour de l'axe de rotation géométrique X et, simultanément, le volet avant 12 bascule progressivement par rapport au volet arrière 13 autour de l'axe de rotation Y.

Lorsque les volets avant 12 et arrière 13 sont sensiblement dans une position verticale, comme illustré sur la figure 2, l'ouverture 7 du réceptacle 2 est sensiblement complètement dégagée.

Dans l'exemple considéré, le bord 14 du volet avant 12 reste sensiblement en permanence en contact avec le rebord 16 du réceptacle 2 lors de l'ouverture du couvercle 3.

Bien entendu, l'invention n'est pas limitée à l'exemple de mise en oeuvre qui vient d'être décrit.

Par exemple, le volet avant 12 peut présenter une largeur relativement faible de sorte qu'en fin d'ouverture, le bord 14 du volet avant 12 se trouve au-dessus du rebord 16 du réceptacle 2, sans contact avec celui-ci.

L'ergot 9 peut par exemple être solidaire d'une pièce coulissante disposée dans la rainure 20.

## Revendications

1. Dispositif (1) de compostage de déchets végétaux, comportant :
- un réceptacle (2),
- un couvercle (3),
**caractérisé par le fait que** le couvercle comporte un volet avant (12) et un volet arrière (13), le volet avant (12) étant fixé de manière pivotante sur le volet arrière (13), le volet arrière (13) étant monté sur le réceptacle de manière à pouvoir pivoter autour d'un axe de rotation géométrique (X) fixe par rapport au réceptacle (2) et coulisser par rapport à cet axe de rotation,
et **par le fait que** le volet arrière (13) du couvercle comporte au moins une rainure (20) et le réceptacle au moins un ergot (9) agencé pour s'engager et coulisser dans la rainure et en ce que la rainure (20) comporte des première (21) et deuxième (22) butées pour limiter la course de coulissement du volet arrière (13) par rapport au réceptacle respectivement lors de l'ouverture et la fermeture du couvercle,
le basculement des volets avant et arrière étant facilité par un réglage approprié de la course de coulissement du couvercle permettant d'équilibrer le poids des volets avant et arrière de manière à ce qu'un effort relativement faible exercé sur le volet avant suffise à faire basculer les volets avant et arrière lors de l'ouverture.

2. Dispositif selon la revendication 1, **caractérisé par le fait qu'**il est agencé de manière à ce que, lorsque le couvercle (3) est amené d'une position de fermeture vers une position d'ouverture, le volet arrière (13), dans un premier temps, coulisse par rapport audit axe de rotation (X) et, dans un deuxième temps, pivote par rapport audit axe de rotation (X) sensiblement sans coulisser par rapport à celui-ci.

3. Dispositif selon l'une des revendications précédentes, **caractérisé par le fait que** les volets avant (12) et arrière (13) sont agencés de manière à ce que, dans la position d'ouverture, ceux-ci puissent former entre eux un angle inférieur à 30°, notamment inférieur à 20°, par exemple inférieur à 10°.

4. Dispositif selon l'une quelconque des revendications précédentes, **caractérisé par le fait que** les volets avant (12) et arrière (13) sont agencés de manière à ce que, dans la position de fermeture, ceux-ci forment un angle inférieur à 180°, par exemple inférieur à 170°.

5. Dispositif selon l'une quelconque des revendications précédentes, **caractérisé par le fait que** le volet avant (12) présente une largeur, mesurée suivant une direction sensiblement perpendiculaire audit axe de rotation (X), inférieure à celle du volet arrière (13).

6. Dispositif selon la revendication 1, **caractérisé par le fait que** la deuxième butée (22) servant lors de la fermeture du couvercle est formée par une pièce, notamment une tige, rapportée dans la rainure.

7. Dispositif selon l'une des revendications 1 et 6, **caractérisé par le fait que** la première butée (21) servant lors de l'ouverture du couvercle est formée par une portée du volet arrière (13).

8. Dispositif selon l'une quelconque des revendications 1 à 7, **caractérisé par le fait que** la rainure (20) s'étend sensiblement suivant un bord du volet arrière.

9. Dispositif selon l'une quelconque des revendications précédentes, **caractérisé par le fait que** le réceptacle et/ou le couvercle comporte des lames en bois assemblées.

## Patentansprüche

1. Vorrichtung (1) zur Kompostierung von pflanzlichen Abfällen, mit
- einem Behälter (2),
- einem Deckel (3),
**dadurch gekennzeichnet, dass** der Deckel eine vordere Klappe (12) und eine hintere Klappe (13) aufweist, wobei die vordere Klappe (12) an der hinteren Klappe (13) drehbar befestigt ist, wobei die hintere Klappe (13) an dem Behältnis in der Form gelagert ist, dass sie sich um eine geometrische Rotationsachse (X), die relativ zu dem Behälter (2) feststehend ist, drehen kann und relativ zu dieser Rotationsachse gleiten kann,
und dadurch, dass die hintere Klappe (13) des Deckels mindestens eine Nut (20) aufweist und der Behälter mindestens einen Zapfen (9) aufweist, der vorgesehen ist, um in die Nut einzugreifen und darin zu gleiten, und dass die Nut (20) einen ersten Ansatz (21) und einen zweiten Ansatz (22) aufweist, um den Gleithub der hinteren Klappe (13) relativ zu dem Behälter beim Öffnen bzw. beim Schließen des Deckels zu begrenzen,
wobei das Kippen der vorderen und hinteren Klappe durch eine geeignete Einstellung des Gleithubs des Deckels vereinfacht wird, was ermöglicht, das Gewicht der vorderen und hinteren Klappe in der Form auszugleichen, dass eine relativ geringe Kraft, die auf die vordere Klappe ausgeübt wird, genügt, um die vordere und hintere Klappe beim Öffnen kippen zu lassen.

2. Vorrichtung nach Anspruch 1, **dadurch gekennzeichnet, dass** sie in der Form vorgesehen ist, dass, wenn der Deckel (3) aus einer Schließstellung in eine Öffnungsstellung gebracht wird, die hintere Klappe (13), in einem ersten Schritt, relativ zu der Rotationsachse (X) gleitet und sich, in einem zweiten Schritt, relativ zu der Rotationsachse (X) dreht, im Wesentlichen ohne relativ zu dieser zu gleiten.

3. Vorrichtung nach einem der vorhergehenden Ansprüche, **dadurch gekennzeichnet, dass** die vordere Klappe (12) und hintere Klappe (13) in der Form vorgesehen sind, dass sie, in der Öffnungsstellung, zwischen einander einen Winkel bilden können, der kleiner ist als 30°, insbesondere kleiner als 20°, zum Beispiel kleiner als 10°.

4. Vorrichtung nach einem der vorhergehenden Ansprüche, **dadurch gekennzeichnet, dass** die vordere Klappe (12) und hintere Klappe (13) in der Form vorgesehen sind, dass sie, in der Schließstellung, einen Winkel bilden können, der kleiner ist als 180°, zum Beispiel kleiner als 170°.

5. Vorrichtung nach einem der vorhergehenden Ansprüche, **dadurch gekennzeichnet, dass** die vordere Klappe (12) eine Breite, gemessen in einer Richtung im Wesentlichen senkrecht zu der Rotationsachse (X), aufweist, die kleiner die der hinteren Klappe (13) ist.

6. Vorrichtung nach Anspruch 1, **dadurch gekennzeichnet, dass** der zweite Anschlag (22), der beim Schließen des Deckels dient, von einem Teil, insbesondere einem Stift, gebildet ist, das in der Nut angebracht ist.

7. Vorrichtung nach einem der Ansprüche 1 und 6, **dadurch gekennzeichnet, dass** der erste Anschlag (21), der beim Öffnen des Deckels dient, von einer Auflagefläche der hinteren Klappe (13) gebildet ist.

8. Vorrichtung nach einem der Ansprüche 1 bis 7, **dadurch gekennzeichnet, dass** die Nut (20) sich im Wesentlichen entlang eines Randes der hinteren Klappe erstreckt.

9. Vorrichtung nach einem der vorhergehenden Ansprüche, **dadurch gekennzeichnet, dass** der Behälter und/oder der Deckel gefügte Zungen aus Holz aufweist.

## Claims

1. Device (1) for composting green wastes, comprising:
- a receptacle (2),
- a cover (3),
**characterised in that** the cover comprises a front flap (12) and a rear flap (13), the front flap (12) being pivotally attached to the rear flap (13), the rear flap (13) being mounted on the receptacle so as to be able to pivot about a fixed geometric axis of rotation (X) relative to the receptacle (2) and to slide relative to said axis of rotation,
and **in that** the rear flap (13) of the cover comprises at least one groove (20) and the receptacle at least one lug (9) arranged to engage and slide in the groove and **in that** the groove (20) comprises first (21) and second (22) stops to limit the sliding stroke of the rear flap (13) relative to the receptacle respectively when opening and closing the cover,
tilting of the front and rear flaps being facilitated by suitable adjustment of the sliding stroke of the cover enabling to balance the weight of the front and rear flaps, so that a relatively small force exerted on the front flap is sufficient to tilt the front and rear flaps when opening.

2. Device according to claim 1, **characterised in that** it is arranged so that when the cover (3) is moved from a closed position to an open position, the rear flap (13), firstly, slides relative to said axis of rotation (X) and, secondly, pivots relative to said axis of rotation (X) substantially without sliding relative thereto.

3. Device according to one of the preceding claims, **characterised in that** the front (12) and rear (13) flaps are arranged so that, in the open position, they can form therebetween an angle of less than 30°, especially less than 20°, for example less than 10°.

4. Device according to any one of the preceding claims, **characterised in that** the front (12) and rear (13) flaps are arranged so that, in the closed position, they form an angle of less than 180°, for example less than 170°.

5. Device according to any one of the preceding claims, **characterised in that** the width of the front flap (12), measured along a direction substantially perpendicular to said axis of rotation (X), is less than that of the rear flap (13).

6. Device according to claim 1, **characterised in that** the second stop (22) used when closing the cover is formed by a part, in particular a rod, attached in the groove.

7. Device according to one of claims 1 and 6, **characterised in that** the first stop (21) used when opening the cover is formed by a bearing surface of the rear flap (13).

8. Device according to any one of claims 1 to 7, **characterised in that** the groove (20) extends substantially along one edge of the rear flap.

9. Device according to any one of the preceding claims, **characterised in that** the receptacle and/or the cover comprises assembled wooden slats.
